Europäisches Patentamt

European Patent Office

Office européen des brevets

(19)

(11) Numéro de publication : **0 192 531**
**B1**

(12) **FASCICULE DE BREVET EUROPÉEN**

(45) Date de publication du fascicule du brevet :
09.11.88

(51) Int. Cl.⁴ : **F 16 C 33/20**, F 16 C 29/02,
F 16 C 33/04

(21) Numéro de dépôt : **86400195.3**

(22) Date de dépôt : **30.01.86**

(54) **Palier notamment pour crémaillère de direction.**

(30) Priorité : 13.02.85 FR 8502327

(43) Date de publication de la demande :
27.08.86 Bulletin 86/35

(45) Mention de la délivrance du brevet :
09.11.88 Bulletin 88/45

(84) Etats contractants désignés :
DE GB IT

(56) Documents cités :
FR-A- 1 378 771
FR-A- 1 512 224
FR-A- 2 140 759
FR-A- 2 149 176
FR-A- 2 166 548
US-A- 4 208 075

(73) Titulaire : **AUTOMOBILES PEUGEOT**
**75, avenue de la Grande Armée**
**F-75116 Paris (FR)**

**AUTOMOBILES CITROEN**
**62 Boulevard Victor-Hugo**
**F-92200 Neuilly-sur-Seine (FR)**

(72) Inventeur : **Camon, Daniel Armand**
**23bis, rue Guy de Gauyon du Verger**
**F-94110 Arcueil (FR)**
Inventeur : **Vadaine, Bernard**
**1, rue E.Varlin**
**F-95190 Goussainville (FR)**

(74) Mandataire : **Boivin, Claude**
**9, rue Edouard-Charton**
**F-78000 Versailles (FR)**

EP 0 192 531 B1

## Description

La présente invention concerne un palier destiné à être monté à l'intérieur d'un carter sur un arbre monté mobile à l'intérieur de ce carter.

Le document FR-A-2 166 548 décrit un palier de ce genre formé de deux demi-bagues annulaires identiques. Ces demi-bagues sont totalement indépendantes l'une de l'autre, ce qui présente des difficultés lors du montage à l'intérieur du carter. Par ailleurs, ce palier doit être associé à des moyens de retenue annexes, à savoir une rondelle à l'une de ses extrémités et des moyens de réglage à son autre extrémité.

La présente invention a pour objet un palier qui, tout en étant simple et peu coûteux, peut être monté automatiquement.

Ce palier est caractérisé en ce que chaque demi-bague est constituée par un corps central sur la circonférence duquel sont moulées régulièrement espacées des pattes dépassant à une extrémité du corps central d'une valeur supérieure à la moitié de leur longueur et destinées à s'emboîter entre les pattes de l'autre demi-bague de manière à former la zone de portée à l'intérieur du carter lorsque les deux demi-bagues sont assemblées l'une à l'autre, en ce que à l'extrémité libre de chaque patte est formé un épaulement tourné vers l'extérieur de la demi-bague et destiné à coopérer avec l'une des faces orthogonales délimitant la portée du palier dans le carter, assurant ainsi un encliquetage du palier à l'intérieur du carter, et en ce que des moyens de clipsage d'une demi-bague à l'autre sont prévus sur un côté de l'extrémité libre de chaque patte.

Ce palier est particulièrement applicable pour assurer le guidage de la crémaillère de direction à l'intérieur du carter de direction d'un véhicule automobile.

On a décrit ci-après, à titre d'exemple non limitatif, un mode de réalisation du palier selon l'invention, avec référence aux dessins annexés dans lesquels :

La Figure 1 est une vue d'ensemble montrant le palier monté à l'intérieur du carter de direction ;

La Figure 2 est une vue en élévation du palier ;

La Figure 3 est une vue de profil de l'une des demi-bagues constituant le palier ;

La Figure 4 en est une vue de profil ;

La Figure 5 en est une vue en coupe suivant V-V de la Figure 3 ;

La Figure 6 montre de profil les deux demi-bagues du palier avant assemblage ;

La Figure 7 est une vue en perspective partielle d'une demi-bague et montre l'une de ses pattes.

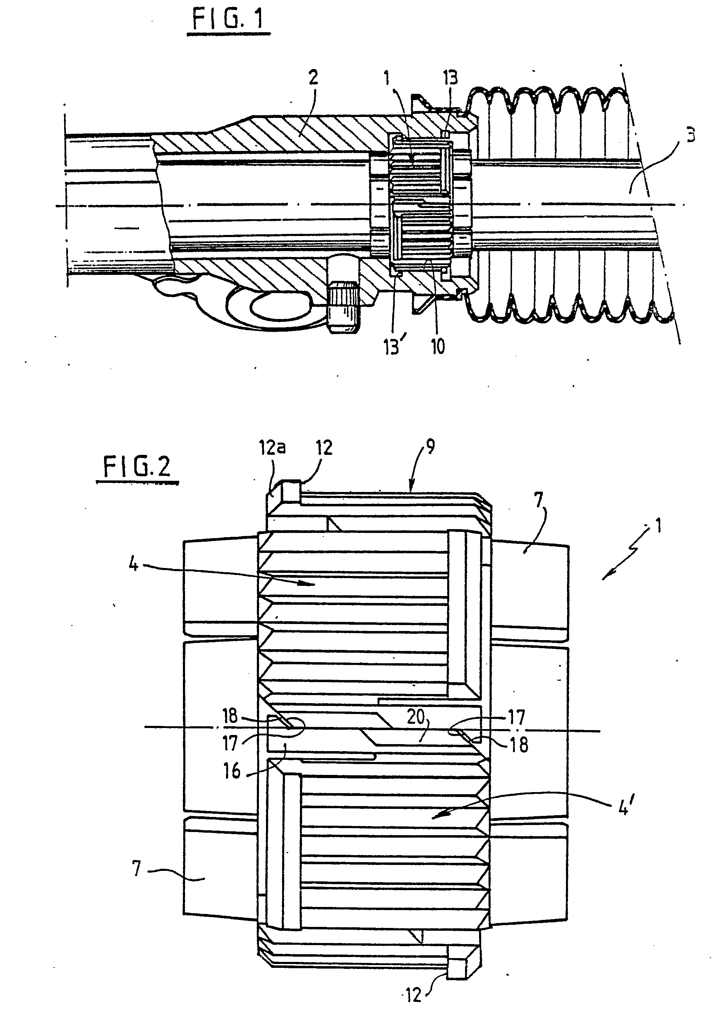

A la Figure 1, on voit le palier 1 monté à l'intérieur d'un carter de direction 2 sur une crémaillère 3.

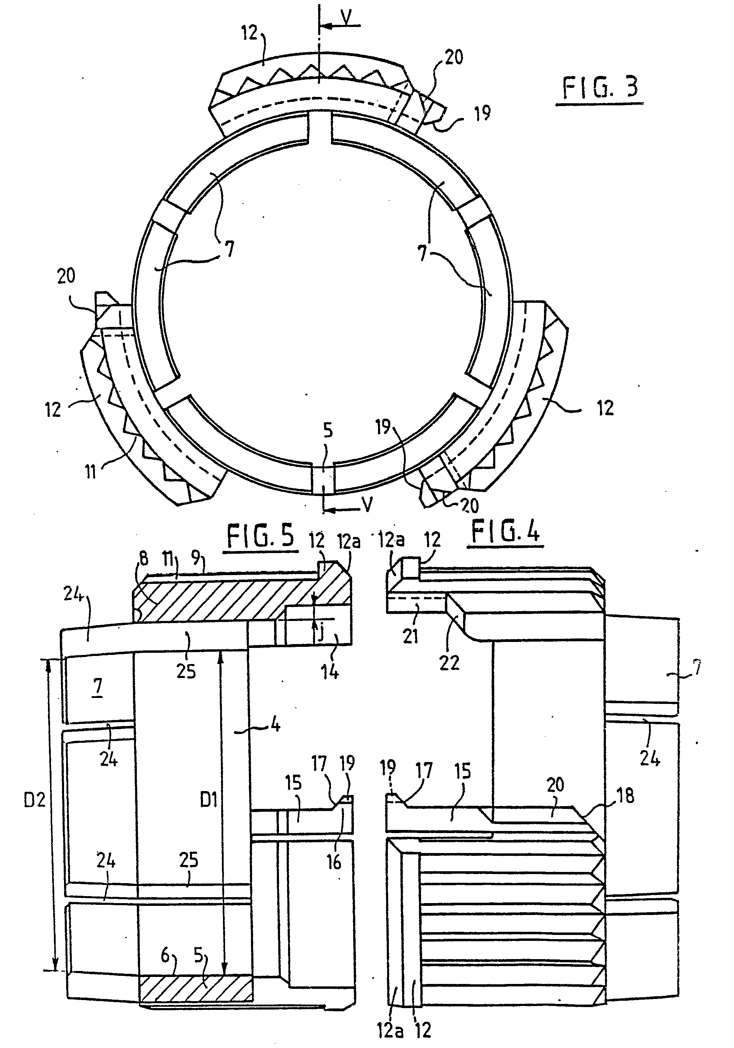

Le palier 1 est constitué de deux demi-bagues 4 et 4' qui se clipsent l'une par rapport à l'autre. Chaque demi-bague (Figure 5) comprend un corps central 5 dont l'alésage intérieur 6 a un diamètre $D_1$ sensiblement supérieur au diamètre de la crémaillère 3 et qui présente à l'une de ses extrémités des lèvres 7 (par exemple au nombre de six), séparées les unes des autres par des fentes 24 et orientées vers l'intérieur de la demi-bague suivant un cône, de telle manière que le petit diamètre $D_2$ soit inférieur au diamètre de la crémaillère. Sur l'extérieur du corps central 5 sont moulées trois pattes 8 régulièrement espacées, s'étendant chacune sur un angle légèrement inférieur à 60°, et dépassant du corps central, à l'extrémité opposée aux lèvres 7, d'une valeur sensiblement supérieure à la moitié de leur longueur, de manière à avoir un jeu de montage entre les deux corps 5 lorsque les demi-bagues sont assemblées l'une à l'autre. Les pattes 8 d'une demi-bague sont destinées à s'emboîter entre les pattes 8 de l'autre demi-bague de manière à former la zone de portée 9 du palier à l'intérieur du carter de direction 2, le diamètre extérieur de cette zone de portée étant sensiblement supérieur au diamètre de l'alésage intérieur 10 du carter de direction. Sur l'extérieur des pattes 8 sont formées des cannelures 11.

A l'extrémité libre de chaque patte 8, est formé, tourné vers l'extérieur de la demi-bague, un épaulement 12 destiné à coopérer avec les faces orthogonales 13 et 13' délimitant la portée 10 formée dans le carter de direction 2. L'épaulement 12 présente un chanfrein extérieur 12a. L'extrémité libre des pattes 8, d'épaisseur moindre, présente un décrochement 14 par rapport au diamètre du corps central 5 de manière à avoir un jeu « j » nécessaire pour le montage du palier à l'intérieur du carter de direction.

Sur l'un des côtés de chaque patte 8 sont réalisés des moyens de clipsage. Ces moyens sont constitués par une languette 15 s'étendant sensiblement jusqu'au corps central 5 et présentant à son extrémité libre une zone élargie 16 reliée à la partie principale de la languette par un chanfrein 17 ; un chanfrein 18 parallèle au chanfrein 17 est formé à l'extrémité opposée de la languette. Lors de l'assemblage, le chanfrein 17 de la languette d'une patte de chaque demi-bague coopère avec le chanfrein 18 de la languette d'une patte de l'autre demi-bague. Par ailleurs, cette zone élargie 16 présente sur sa face latérale extérieur un chanfrein 19 orienté vers l'intérieur de la demi-bague et un plan incliné 20 est prévu sur l'extrémité de la patte opposée à la languette. Lors de l'assemblage, chaque chanfrein 19 d'une demi-bague glisse sur le plan incliné 20 correspondant de l'autre demi-bague.

Sur le côté de la patte 8, opposé à la languette 15, est prévu un décrochement latéral 21 grâce à un chanfrein 22.

A l'intérieur du corps central, les trois fentes 24 situées au niveau des pattes 8 sont prolongées par des rainures 25 jusqu'à l'extrémité opposée du corps central 5 ; lorsque les deux demi-bagues sont assemblées, les rainures 25 de l'une des demi-bagues sont ainsi alternées avec les rainures de l'autre demi-bague. L'ensemble fonctionnant dans la graisse, celle-ci est piégée à l'intérieur du palier et la crémaillère est bien lubrifiée.

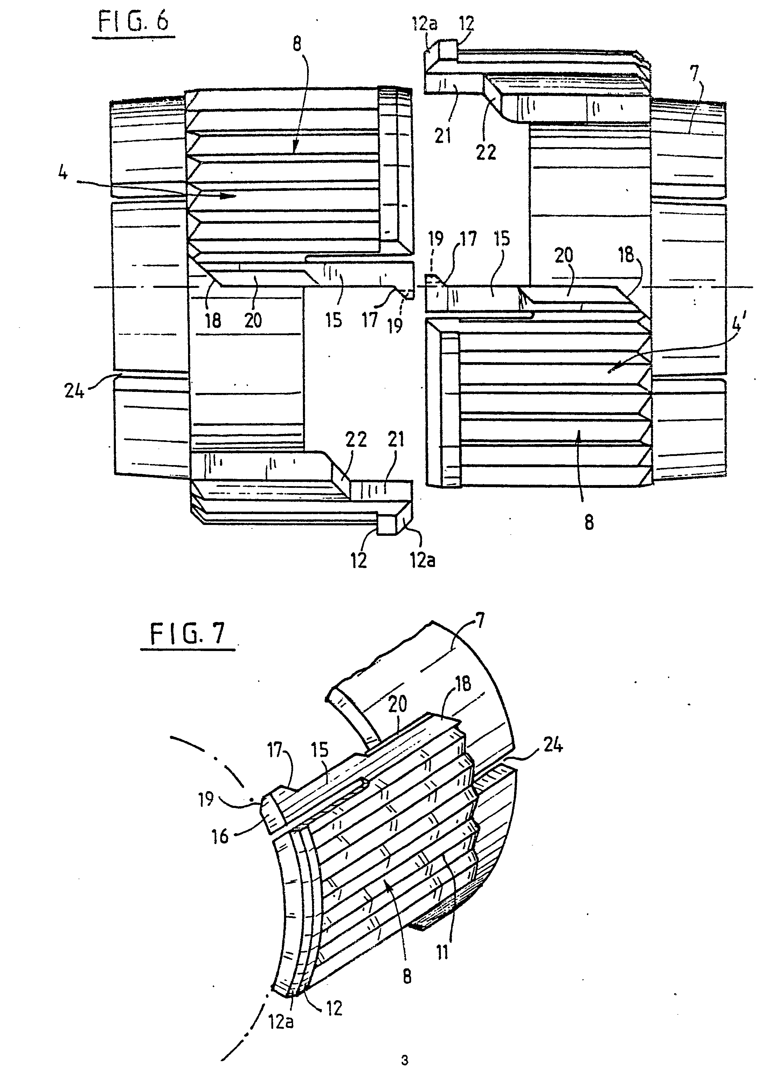

L'assemblage des deux demi-bagues s'effectue ainsi (voir Figures 2 et 6). On présente les demi-bagues face à face, les pattes 8 de l'une étant alternées par rapport à celles de l'autre ; on exerce un effort dans le sens qui les rapproche. Les chanfreins 22 de l'une des demi-bagues se trouvent face à face avec les chanfreins 22 de l'autre demi-bague, ce qui provoque un léger pivotement relatif des demi-bagues. Les languettes 15 se soulèvent, grâce à leur chanfrein 19 qui glisse sur le plan incliné 20 correspondant, jusqu'à ce que les chanfreins 17 des languettes dépassent les chanfreins 18, les languettes 15 reprenant alors leur position.

Les deux demi-bagues étant assemblées, le palier 1 est engagé à l'intérieur du carter de direction 2 ; on applique un effort sur la zone frontale des pattes 8. Les extrémités des pattes 8 de la demi-bague 4, grâce au jeu « j » et au chanfrein 12a des épaulements 12, s'abaissent en franchissant la première face orthogonale 13 de la portée 10 du carter de direction 2. Lorsque les épaulements 12 de l'autre demi-bague 4' arrivent en butée contre cette première face orthogonale 13 de la portée 10, on maintient l'effort sur les zones frontales des pattes 8. La demi-bague 4 poursuit son mouvement, grâce au jeu entre les corps 5 des demi-bagues jusqu'à ce que ses épaulements 12 dépassent la seconde face orthogonale 13' de la portée 10. Le palier 1 est ainsi bien positionné et on peut alors engager la crémaillère 3 à l'intérieur du palier grâce à la déformation des lèvres 7.

En fonctionnement, les mouvements radiaux de la crémaillère 3 sont amortis de la manière suivante :

- ils sont tout d'abord encaissés par la déformation des lèvres 7 qui sont serrées sur la crémaillère, celle-ci venant en contact avec l'alésage du palier.

- ils sont ensuite encaissés par le corps central 5 et les pattes 8 dont les cannelures 10 s'écrasent, donnant ainsi de la souplesse au palier.

## Revendications

1. Palier destiné à être monté à l'intérieur d'un carter (2) sur un arbre (3) pouvant coulisser à l'intérieur de ce carter, et constitué de deux demi-bagues annulaires identiques (4 et 4'), caractérisé en ce que chaque demi-bague est constituée par un corps central (5) sur la circonférence duquel sont moulées régulièrement espacées des pattes (8) dépassant à une extrémité du corps central d'une valeur supérieure à la moitié de leur longueur et destinées à s'emboîter entre les pattes de l'autre demi-bague de manière à former la zone de portée (9) à l'intérieur du carter (2) lorsque les deux demi-bagues sont assemblées l'une à l'autre, en ce que à l'extrémité libre de chaque patte (8) est formé un épaulement (12) tourné vers l'extérieur de la demi-bague et destiné à coopérer avec l'une des faces orthogonales (13 ou 13') délimitant la portée (9) du palier dans le carter (2), assurant ainsi un encliquetage du palier à l'intérieur du carter, et en ce que des moyens de clipsage d'une demi-bague à l'autre sont prévus sur un côté de l'extrémité libre de chaque patte (8).

2. Palier selon la revendication 1, caractérisé en ce que les moyens de clipsage comprennent une languette (15) s'étendant sensiblement jusqu'au corps central (5) et présentant à son extrémité libre une zone élargie (16) reliée à la partie principale de la languette par un chanfrein (17), tandis que sur l'autre extrémité de chaque patte (8) est réalisé un chanfrein (18) parallèle au chanfrein (17).

3. Palier selon la revendication 2, caractérisé en ce que chaque languette (15) présente sur l'un des côtés de sa zone élargie (16) un chanfrein (19) tourné vers l'intérieur de la demi-bague et en ce qu'un plan incliné (20) est prévu à l'extrémité de la patte opposée à la languette.

4. Palier selon la revendication 2 ou 3, caractérisé en ce que sur le côté des pattes opposé à la languette (15) est prévu un décrochement latéral (21) grâce à un chanfrein (22), de manière à permettre un léger mouvement de rotation des demi-bagues lorsque les pattes sont emboîtées les unes dans les autres.

5. Palier selon l'une quelconque des revendications 1 à 4, caractérisé en ce que des cannelures (11) sont formées sur la surface extérieure des pattes (8).

6. Palier selon l'une quelconque des revendications 1 à 5, caractérisé en ce que le corps central (5) présente à son extrémité opposée aux pattes (8) des lèvres (7) orientées vers l'intérieur de la demi-bague.

7. Palier selon la revendication 6, caractérisé en ce que les fentes (24) séparant deux lèvres (7) et situées au droit des pattes (8) sont prolongées par des rainures (25) de manière à former des réserves de graisse dans le palier.

## Claims

1. Bearing intended to be mounted inside a casing (2) on a shaft (3) slidable inside this casing, and formed of two identical annular half rings (4, 4'), characterized in that each half ring is formed by a central body (5) on the circumference of which evenly spaced apart lugs (8) are moulded extending beyond one end of the central body by a value greater than half their length and intended to fit between the lugs of the other half ring so as to form the bearing surface zone (9) inside the casing (2) when the two half rings are assembled together, in that on the free end of each lug (8) a shoulder (12) is formed turned outwardly of the half ring and intended to cooperate with one of the orthogonal faces (13 or 13') defining the bearing surface (9) of the bearing in the casing (2) thus providing clip-fitting of the bearing inside the casing and in that means for clipping one half ring to the other are provided on one side of the free end of each lug (8).

2. Bearing according to claim 1, characterized in that the clipping means comprise a tongue (15) extending substantially as far as the central body (5) and having at its free end an enlarged zone (16) joined to the main part of the tongue by a chamfer (17), whereas at the other end of each lug (8) a chamfer (18) is formed parallel to the chamfer (17).

3. Bearing according to claim 2, characterized in that each tongue (15) has on one of the sides of its enlarged zone (16) a chamfer (19) turned towards the inside of the half ring and in that an inclined plane (20) is provided at the end of the lug opposite the tongue.

4. Bearing according to claim 2 or 3, characterized in that, on the side of the lugs opposite the tongue (15), a lateral set-back (21) is provided by means of a chamfer (22) so as to allow a slight rotational movement of the half rings when the lugs are fitted into each other.

5. Bearing according to any one of claims 1 to 4, characterized in that splines (11) are formed on the external surface of the lugs (8).

6. Bearing according to any one of claims 1 to 5, characterized in that the central body (5) has at its end opposite the lugs (8) lips (7) oriented inwardly of the half ring.

7. Bearing according to claim 6, characterized in that the slits (24) separating two lips (7) and situated in line with the lugs (8) are extended by grooves (2) so as to form grease reserves in the bearing.

**Patentansprüche**

1. Lager, das dazu bestimmt ist, im Inneren eines Gehäuses (2) auf einer im Inneren dieses Gehäuses verschiebbaren Welle (3) montiert zu werden und das aus zwei identischen Halbringen (4 und 4')·aufgebaut ist, dadurch gekennzeichnet, daß jeder Halbring aus einem Zentralkörper (5) gebildet ist, an dessen Umfang in regelmäßigen Abständen Klauen (8) angeformt sind, die an einem Ende den Zentralkörper um einen Wert oberhalb der Hälfte ihrer Länge überragen und dazu bestimmt sind, zwischen die Klauen des anderen Halbrings einzugreifen, derart, daß sie im Inneren des Gehäuses (2) die Auflagerzone (9) bilden, wenn die beiden Halbringe zusammengefügt sind und daß am freien Ende jeder Klaue (8) ein vom Halbring nach außen gerichteter Ansatz (12) ausgebildet ist, der dazu bestimmt ist, mit einer von orthogonalen Flächen (13 oder 13') zusammenzuwirken, welche die Auflagerfläche (9) des Lagers im Gehäuse (2) begrenzen und der so eine Sperrklinke des Lagers im Inneren des Gehäuses bildet und daß Mittel zum Verklinken des einen Halbringes mit dem anderen an einer Seite des freien Endes jeder Klaue (8) vorgesehen sind.

2. Lager nach Anspruch 1, dadurch gekennzeichnet, daß die Mittel zum Verklinken eine Zunge (15) aufweisen, die sich im wesentlichen bis zum Zentralkörper (5) erstreckt und an ihrem freien Ende eine verbreiterte Zone (16) besitzt, welche mit dem Hauptteil der Zunge über eine Abschrägung (17) verbunden ist, während am anderen Ende jeder Klaue (8) eine parallel zur Abschrägung (17) verlaufende Abschrägung (18) realisiert ist.

3. Lager nach Anspruch 2, dadurch gekennzeichnet, daß jedé Zunge (15) an einer der Seiten ihrer verbreiterten Zone (16) eine Abschrägung (19) besitzt, die dem Inneren des Halbrings zugewandt ist und daß eine geneigte Fläche (20) an dem der·Zunge gegenüberliegenden Ende der Klaue vorgesehen ist.

4. Lager nach Anspruch 2 oder 3, dadurch gekennzeichnet, daß an der Seite der Klauen, die der Zunge (15) gegenüberliegt, aufgrund einer Abschrägung (22) eine seitliche Versetzung (21) vorgesehen ist, derart, daß eine leichte Drehbewegung der Halbringe zulässig ist, wenn die Klauen im Eingriff miteinander sind.

5. Lager nach einem der Ansprüche 1 bis 4, dadurch gekennzeichnet, daß auf der äußeren Oberfläche der Klauen (8) Rillen (11) ausgebildet sind.

6. Lager nach einem der Ansprüche 1 bis 5, dadurch gekennzeichnet, daß der Zentralkörper (5) an seinem den Klauen (8) entgegengesetzten Ende in das Innere des Halbrings gerichtete Lippen (7) aufweist.

7. Lager nach Anspruch 6, dadurch gekennzeichnet, daß die Schlitze (24), welche zwei Lippen (7) voneinander trennen und in gerader Linie zu den Klauen (8) gelegen sind, durch Rinnen (25) verlängert sind, derart, daß sie Fettreserven im Lager bilden.

## FIG. 1

## FIG. 2

0 192 531

FIG. 3

FIG. 5    FIG. 4

2

FIG. 6

FIG. 7

3